# EUROPÄISCHE PATENTSCHRIFT

(11) **EP 1 382 839 B1**
(45) Veröffentlichungstag und Bekanntmachung des Hinweises auf die Patenterteilung: **06.02.2008**
(21) Anmeldenummer: 03007076.7
(22) Anmeldetag: 28.03.2003
(51) Int. Cl.: F02M 59/46, F02M 47/02, F02M 61/16

(54) **Ankerbaugruppe für Kraftstoffinjektoren**
Armature assembly for fuel injectors
Assemblage d'armature pour injecteurs de carburant

(30) Priorität: 18.07.2002 DE 10232718
(43) Veröffentlichungstag der Anmeldung: 21.01.2004
(73) Patentinhaber: ROBERT BOSCH GMBH, 70442 Stuttgart (DE)
(72) Erfinder: Schoenfeld, Dirk, 73776 Altbach (DE)

(56) Entgegenhaltungen:
- DE-A- 10 065 528
- DE-A- 10 100 422
- DE-A- 19 650 865
- DE-A- 19 708 104
- US-A- 3 797 756
- US-A- 4 331 317
- US-A- 4 498 625

## Beschreibung

### Technisches Gebiet

Zur Betätigung von Kraftstoffinjektoren in Einspritzanlagen von Verbrennungskraftmaschinen kommen neben mechanisch/hydraulischen Übersetzern und Piezoaktoren vielfach auch Magnetventile zum Einsatz. Mittels als Magnetventile ausgebildeter Aktoren werden Schließelemente zur Entlastung eines unter hohem Druck stehenden, von einem Steuervolumen beaufschlagten Steuerraum bewegt. Durch die Druckentlastung/Druckbeaufschlagung des Steuerraumes erfolgt eine Hubbewegung eines Einspritzventilgliedes innerhalb des Kraftstoffinjektors.

### Stand der Technik

DE 196 50 865 A1 hat ein Magnetventil zur Steuerung des Kraftstoffdruckes im Steuerdruckraum eines Einspritzventiles, etwa eines Common-Rail-Einspritzsystemes, zum Gegenstand. Über den Kraftstoffdruck im Steuerdruckraum wird die Bewegung eines Ventilkolbens gesteuert, mit dem eine Einspritzöffnung des Einspritzventiles geöffnet oder verschlossen wird. Das Magnetventil weist einen in einem Gehäuseteil angeordneten Elektromagneten, einen beweglichen Anker und ein mit dem Anker bewegtes, von einer Schließfeder in Schließrichtung beaufschlagtes Steuerventilglied auf, das mit einem Ventilsitz des Magnetventiles zusammenwirkt und so den Kraftstoffabfluß aus dem Steuerdrückraum steuert. Auch aus DE 197 08 104 A1 ist ein solches Magnetventil zur Steuerung des Kraftstoffdruckes im Steuerdruckraum eines Einspritzventils bekannt.

DE 10065528 offenbart ein direkt elektromagnetisch eine Ventilnadel betätigendes Brennstoffeinspritzventil, wobei ein Bolzen den Anker mit der Ventilnadel so verbindet, dass ein Vorhub zur Erhöhung der Öffnungskraft entsteht.

Zur Vermeidung der nachteiligen Folgen des bei Magnetventilen nach deren Ansteuerung auftretenden Ankerprellens sind die Anker der Magnetventile gemäß DE 196 50 865 A1 und DE 197 08 104 A1 als zweiteilige Magnetanker ausgebildet. Die Anker umfassen einen Ankerbolzen und eine auf dem Ankerbolzen gleitverschiebbar aufgenommene Ankerplatte. Durch den Einsatz zweiteiliger Anker wird deren effektiv abgebremste Masse und damit die das Ankerprellen verursachende kinetische Energie des auf den Ventilsitz auftreffenden Ankers vermindert. Ein Ansteuern des Magnetventils führt erst dann wieder zu einer definierten Einspritzmenge, wenn die Ankerplatte nicht mehr nachschwingt. Daher sind Maßnahmen erforderlich, um das Nachschwingen der Ankerplatte zu reduzieren. Dies ist insbesondere dann erforderlich, wenn kurze zeitliche Abstände zwischen einer Vor- und einer Haupteinspritzphase erforderlich werden. Zur Lösung dieses Problems kommen Dämpfungseinrichtungen zum Einsatz, welche einen ortsfesten Teil und einen mit der Ankerplatte bewegten Teil umfassen. Der ortsfeste Teil kann durch einen Überhubanschlag gebildet sein, welcher die maximale Weglänge begrenzt, um die sich die Ankerplatte auf dem Ankerbolzen verschieben kann. Der bewegliche Teil wird durch einen dem ortsfesten Teil zugewandten Vorsprung an einer Ankerplatte gebildet. Der Überhubanschlag kann durch die Stirnseite eines den Ankerbolzen führenden, in dem Gehäuse des Magnetventils ortsfest eingespanntes Gleitstück oder durch ein dem Gleitstück vorgelagertes Teil, wie beispielsweise eine Ringscheibe, gebildet sein. Bei einer Annäherung der Ankerplatte an den Überhubanschlag entsteht zwischen den einander zugewandten Stirnseiten der Ankerplatte und des Überhubanschlags ein hydraulischer Dämpfungsraum. Der in dem hydraulischen Dämpfüngsraum enthaltene Kraftstoff erzeugt eine Kraft, die der Bewegung der Ankerplatte entgegenwirkt, so daß das Nachschwingen der Ankerplatte stark gedämpft wird.

Problematisch bei den Magnetventilen gemäß DE 196 50 865 A1 und DE 197 08 104 A1 ist die genaue Einstellung des maximalen Gleitweges, welcher der Ankerplatte am Ankerbolzen zur Verfügung stehen soll. Der maximale Gleitweg, auch Überhub genannt, wird durch Austauschen der Überhubscheibe, zusätzlicher Distanzscheiben oder Abschleifen des Überhubanschlages eingestellt. Diese Lösungen sind, da sie eine schrittweise durchzuführende iterative Einstellung erfordern, sehr aufwendig und nur schwer zu automatisieren und verlängern daher die Taktzeiten in der Fertigung.

DE 101 00 422.2 hat ein Magnetventil zur Steuerung eines Einspritzventils einer Verbrennungskraftmaschine zum Gegenstand. Das Magnetventil umfaßt einen beweglichen Anker mit Ankerplatte und Ankerbolzen und ein mit dem Anker bewegtes und mit einem Ventilsitz zusammenwirkendes Steuerventilteil zum Öffnen und Schließen eines Kraftstoffablaufkanales eines Steuerdruckraumes im Einspritzventil. Die Ankerplatte ist, unter Einwirkung ihrer trägen Masse in Schließrichtung des Steuerventilgliedes, entgegen der Spannkraft einer auf die Ankerplatte wirkenden Rückholfeder auf dem Ankerbolzen gleitend, verschiebbar -gelagert Mittels einer hydraulischen Dämpfüngseinrichtung ist das Nachschwingen der Ankerplatte bei ihrer dynamischen Verschiebung auf dem Ankerbolzen dämpfbar. Die Dämpfüngseinrichtung umfaßt einen ortsfesten Teil und einen mit der Ankerplatte bewegten Teil. Der mit der Ankerplatte bewegte Teil wird durch ein Stellglied gebildet, welches an einem von dem Elektromagneten abgewandten Abschnitt der Ankerplatte angeordnet ist und zur Einstellung des maximalen Gleitweges der Ankerplatte relativ zu einer dem Elektromagneten zugewandten Stirnseite der Ankerplatte in Gleitrichtung der Ankerplatte verstellbar ist. Das Stellglied ist als ein mit einem Innengewinde versehenes Schraubglied ausgebildet, welches auf einen von dem Ankerbolzen durchdrungenen und durch einen mit einem Außengewinde versehenen Abschnitt der Ankerplatte verschraubt ist.

### Darstellung der Erfindung

Mit der erfindungsgemäß vorgeschlagenen Lösung läßt sich eine Vormontage einer Ankerbaugruppe, die einen Ankerbolzen, eine Ankerplatte, eine als Paßschraube ausgebildete Ventilspannschraube mit Ankerbolzenführungsabschnitt umfaßt, außerhalb des Injektorkörpers erzielen, was eine gemeinsame Einstellung der Toleranz von Ankerhub und Überhub ermöglicht. Das Fügen eines zylindrisch oder konisch ausgebildeten Paßstiftes ist im Rahmen einer Vormontage der Ankerbaugruppe außerhalb des Injektors besser durchführbar als im montierten Zustand. Durch die Vormontage der Ankerbolzenbaugruppe außerhalb des Injektors sind Arbeitsgänge leichter durchzuführen als im montierten Zustand.

Eine als Paßschraube ausgeführte Ventilspannschraube kann mehrere Durchgangsbohrungen, die als Montageöffnungen dienen, umfassen, in welche eine mehrere Stehbolzen umfassende Schraubeinrichtung eingeführt wird. Um dies zu gewährleisten, wird auch die am Ankerbolzen aufgenommene Ankerplatte mit einer der Zahl der Montageöffnungen der Ventilspannschraube entsprechenden Durchbrüchen versehen. Mittels der Schraubeinrichtung wird die Ventilspannschraube in das korrespondierende Innengewinde eines Injektorkörpers zum Beispiel, eingeschraubt. Das Verschrauben der als Paßschraube ausgeführten Ventilspannschraube erfolgt nach Einlegen eines klassierten Einstellringes, mit welchem Ankerhub und Überhub der vormontierten Ankerbaugruppe innerhalb des als Kraftstoffinjektor beispielsweise ausgeführten Einspritzventils eingestellt werden. Über den Einstellring wird der Ankerhubweg eingestellt. Der Überhub ergibt sich aus der Vormontagetoleranz. Dadurch kann eine sehr genaue Ankertoleranz von einigen wenigen µm auf Kosten einer größeren Überhubtoleranz genauestens eingestellt werden. Durch die Verwendung einer im Rahmen der Vormontage mit dem Ankerbolzen über einen Paßstift zu fügende Ankerplatte können Sicherungshülse und Sicherungsscheibe, wie sie bisher erforderlich waren, nunmehr entfallen. Dadurch wiederum kann die die Ankergruppe beaufschlagende Ventilfeder vollständig im Magnetkern untergebracht werden. Dies macht das Fertigen einer Senkung im Ablaufstutzen überflüssig. Schließt die Ankerplatte in vorteilhafter Weise bündig mit der oberen Stirnseite des Ankerbolzens ab, kann der Durchmesser des Magnetkems kleiner gehalten werden, wodurch sich wiederurn eine größere elektromagnetisch erzeugte Betätigungskraft erreichen läßt.

Schließlich kann durch die erfindungsgemäß vorgeschlagene Lösung eine vereinfachte, leichter herstellbare Ankerbolzengeometrie erzielt werden, die in einer Ausführungsvariante der erfindungsgemäß vorgeschlagenen Lösung direkt an einer Ankerbolzenführungsfläche der Ventilspannschraube geführt ist.

Mittels eines außerhalb des Injektorkörpers montierten konisch oder zylindrisch beschaffenen Paßstiftes kann im Rahmen der Vormontage der Ankerbaugruppe eine gemeinsame Toleranz von Ankerhub und Überhub erfolgen. Der in eine Querbohrung des Ankerbolzens beispielsweise eingeführte zylindrisch oder konisch beschaffene Paßstift verbindet die Ankerplatte der Ankerbaugruppe mit dem Ankerbolzen, wobei die Bohrung in einem Hülsenbereich der Ankerplatte, die vom Paßstift seitlich durchsetzt ist, mit einem Spiel zwischen 5 und 25 µm ausgeführt sein kann.

### Zeichnung

Anhand der Zeichnung wird die Erfindung nachstehend eingehender beschrieben.

Es zeigt:
- Figur 1: eine bekannte Magnetventilbaugruppe an einem als Kraftstoffinjektor ausgebildeten Einspritzventil im Längsschnitt,.
- Figur 2: eine Ausführungsvariante der erfindungsgemäßen Lösung mit einer Ankerscheibe im Halbschnitt und
- Figur 3: die Ausführungsvariante der erfindungsgemäßen Lösung mit einer Ankerbaugruppe mit einem am Ankerbolzen über einen Paßstift fixierte Ankerplatte.

### Ausführungsvarianten

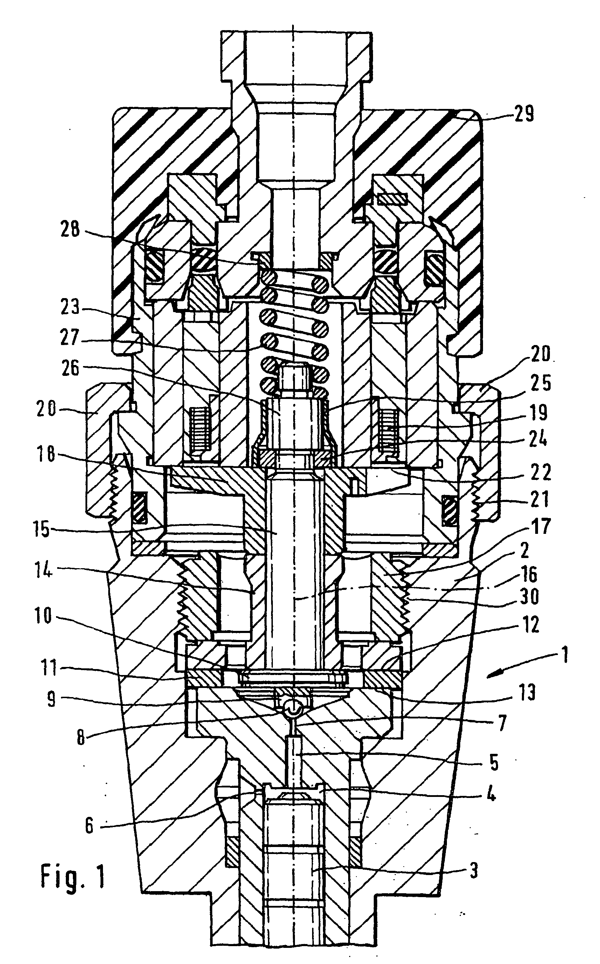

Figur 1 zeigt eine bekannte Magnetventilbaugruppe an einem als Kraftstoffmjektor beschaffenen Einspritzventil.

Das in Figur 1 dargestellte Einspritzventil 1 ist beispielsweise als ein Kraftstoffinjektor zum Einsatz an Hochdruckspeicherräumen (Common-Rail) umfassenden Kraftstoffeinspritzanlagen für selbstzündende Verbrennungskraftmaschinen ausgebildet. Das Einspritzventil 1 umfaßt einen Körper 2, der im vorliegenden Ausführungsbeispiel als Injektorkörper beschaffen ist und ein in vertikaler Richtung bewegbares Einspritzventilglied, z. B. einen Stößel, welcher eine Düsennadel betätigt, oder ein Einspritzventilglied, welches als Düsennadel beschaffen ist, aufweist. Das Einspritzventilglied 3 wird über die Druckbeaufschlagung bzw. die Druckentlastung eines im Injektorkörper 2 ausgebildeten Steuerraumes 4 betätigt. Über ein Zulaufdrosselelement 6 ist der Steuerraum 4 stets mit einem ausreichenden Steuervolumen befüllt. Der Steuerraum 4 ist über einen Entlastungskanal 5, der ein Ablaufdrosselelement 7 umfaßt, druckentlastbar. Durch eine Druckentlastung des Steuerraumes 4 bewegt sich das Einspritzventilglied 3 in vertikaler Richtung nach oben und gibt in Figur 1 nicht dargestellte Einspritzöffnungen am brennraumseitigen Ende des Einspritzventils 1 frei.

Die Druckentlastung des Steuerraumes 4 erfolgt durch Betätigung eines in der Darstellung gemäß Figur 1 kugelförmig ausgebildeten Schließelementes 8, welches von einem Schließelementführungskörper 9, der an die Kontur des Schließelementes 8 angepaßt ist, teilweise umschlossen ist. Der Schließelementführungskörper 9 ist an einem scheibenförmig konfigurierten Anschlag 10 eines Ankerbolzens 15 aufgenommen. Während eine Druckentlastung des Steuerraumes 4 durch eine vertikale Aufwärtsbewegung des Ankerbolzens 15 erfolgt, findet ein Verschließen des Entlastungskanales 5 und ein damit einhergehender Druckaufbau im Steuerraum 4 aufgrund einer vertikalen Abwärtsbewegung des Schließelementes 8 statt. Dabei stellt sich im Steuerraum 4, der kontinuierlich über eine Zulaufdrossel 6 beaufschlagt wird, ein hoher Druckaufbau ein, der eine Schließbewegung des Einspritzventilgliedes 3 bewirkt, bei der die in Figur 1 nicht dargestellten, am brennraumseitigen Ende ausgebildeten Einspritzöffnungen verschlossen werden.

In der Darstellung gemäß Figur 1 umfaßt der Ankerbolzen 15 den bereits erwähnten scheibenförmig ausgebildeten Anschlag 10 sowie eine Ankerscheibe 14. Bündig mit der oberen, ringförmigen Stirnseite der Ankerscheibe 14 abschließend, umfaßt der Anker weiterhin eine Ankerplatte 18, die am Ankerbolzen 15 mittels einer Sicherungsscheibe 24 gesichert ist, die ihrerseits von einer Sicherungshülse 25 umschlossen ist. Die Ankerbaugruppe gemäß der Darstellung in Figur 1 ist über eine ein Außengewinde umfassende Ventilspannschraube 17 in einem Innengewinde 30 des Injektorkörpers 2 verschraubt. Über einen entsprechend verschiedener Dicke klassierten Einstellring 11 erfolgt die Einstellung des Hubes des Ankerbolzens 15 zwischen der Ankerscheibe 14 und dem Schließelementführungskörper 9, der das hier kugelförmig ausgebildete Schließelement 8 teilweise umgreift. Der Überhub der Ankerplatte 18 zwischen dem Ankerbolzen 15 und der hier dargestellten Ankerscheibe 14 wird durch die in verschiedenen Dicken klassierte Sicherungsscheibe 24 eingestellt. Eine radiale Verschiebung der Sicherungsscheibe 24 wird durch die Montage einer Sicherungshülse 25 erreicht. Am Ankerbolzen 15 gemäß der Darstellung in Figur 1 ist oberhalb des diesen umschließenden Sicherungsringes 24 ein zapfenförmiger Fortsatz 26 ausgebildet, der teilweise von der Sicherungshülse 25 umschlossen ist. An der oberen, ringförmig verlaufenden Stirnseite des zapfenförmigen Fortsatzes 26 ist eine Ventilfeder 27 aufgenommen, die sich ihrerseits an einem Ventilfedersitz 28 abstützt, der innerhalb eines beispielsweise aus Kunststoff gefertigten Verschlusses 29 aufgenommen ist.

Das Magnetventil gemäß der Darstellung in Figur 1 umfaßt ferner einen in einen Magnetkern eingelassenen Elektromagneten 19, der einer oberen Stirnseite 22 der Ankerplatte 18 des mehrteiligen Ankers gegenüberliegend angeordnet ist. Der Magnetkern, der den Elektromagneten 19 umschließt, ist seinerseits von einer Magnethülse 23 umschlossen, die mittels einer Überwurfmutter 20 an einem Außengewinde 21 des Injektorkörpers 2 befestigt wird. Die Magnethülse 23 umfaßt darüber hinaus ringförmig verlaufende Ausnehmungen, in welchen der bevorzugt aus Kunststoff gefertigte Verschluß 29 einrastet.

Die Montage der in Figur 1 dargestellten Ankerbaugruppe gliedert sich grob in folgende Schritte. Zunächst wird die Dicke des Einstellringes 11 ermittelt, der in unterschiedlich klassierten Dicken vorliegt. Bei der Montage der Magnetventilbaugruppe gemäß Figur 1 erfolgt nach Auswahl des entsprechenden klassierten Einstellringes 11 das Einlegen des Einstellringes 11, des Schließelementes 8 und des Schließelementführungskörpers 9 in den Injektorkörper 2. Danach werden die Ankerscheibe 14 und der Ankerbolzen 15 montiert, die durch die ein Außengewinde aufweisende Ventilspannschraube 17 im Innengewinde 30 des Injektorkörpers 2 befestigt werden. Entsprechend der sich einstellenden Position der danach auf den Ankerbolzen 15 aufzuschiebenden Ankerplatte 18, erfolgt die Ermittlung der geeigneten Dicke einer Sicherungsscheibe 24, welche durch eine Sicheningshülse 25 gegen radiale Verschiebung zu sichern ist. Abschließend wird die Ankerplatte 18 montiert, die anschließend durch Montage der Sicherungsscheibe 24 und der diese umgebenden Sicherungshülse 25 in ihrer Einbauposition innerhalb des Injektorkörpers 2 komplettiert wird.

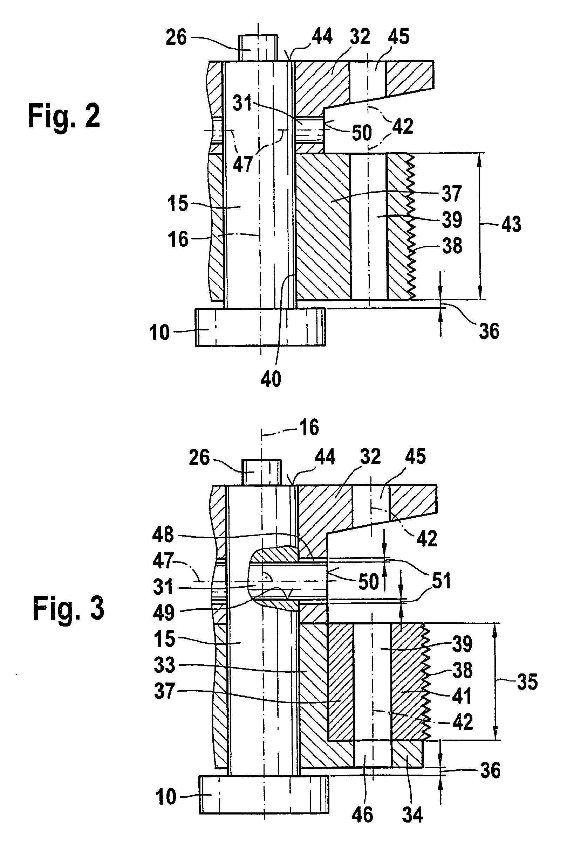

Figur 2 zeigt eine Ausführungsvariante einer vormontierbaren erfindungsgemäßen Ankerbaugruppe mit einer Ankerbolzenführung im Halbschnitt.

Die erfindungsgemäß vorgeschlagene Lösung erlaubt eine Vormontage der Ankerbaugruppe, welche den Ankerbolzen 15, die Ankerplatte 32 und eine in einer Bauhöhe 43 ausgebildete Ventilspannmutter 37 umfaßt. Mittels eines Paßstiftes 31, der in eine Öffnung am hülsenförmigen Fortsatz der Ankerplatte 32 eingeschoben wird, wird die Ankerplatte 32 am Ankerbolzen 15 fixiert. Der symmetrisch zu seiner Symmetrieachse 47 ausgebildete Paßstift 31 kann entweder zylindrisch oder konisch ausgebildet sein. Der Paßstift 31 wird so weit in den Ankerbolzen 15 eingebracht, daß eine Stirnseite 50 des konisch oder zylindrisch ausgebildeten Paßstiftes 31 mit der Mantelfläche des hülsenförmigen Bereiches der Ankerplatte 32 bündig abschließt. Die Bohrung, durch welche der konisch oder zylindrisch ausgebildete Paßstift 31 in die Mantelfläche des Ankerbolzens 15 der Ankerbaugruppe eingeschoben wird, geht aus Figur 3 näher hervor.

Die Montageschritte im Rahmen der Vormontage können in vorteilhafter Weise außerhalb des Einspritzventiles vorgenommen werden; dadurch sind Arbeitsgänge, wie Laserschweißen und Aufschrumpfen erwärmter Bauteile besser durchführbar, verglichen mit einer Montage innerhalb des Einspritzventiles.

In vorteilhafter Weise übernimmt in der Ausführungsvariante der erfindungsgemäßen Lösung gemäß Figur 2 eine Durchgangsbohrung der Ventilspannschraube 37, an der ein Außengewinde 38 ausgebildet ist, die Führung der Ventilspannschraube am Ankerbolzen 15. Die Führung zwischen der Durchgangsbohrung in der Ventilspannschraube 37 und der Mantelfläche des Ankerbolzens 15 bildet den Ankerbolzenführungsabschnitt 40. In dieser Ausführungsvariante der erfindungsgemäß vorgeschlagenen, vormontierbaren Ankerbaugruppe, ist ein in Figur 1 dargestelltes, als Ankerscheibe 14 füngierendes Bauteil entbehrlich, da die Funktion der Führung des Ankerbolzens 15 in die Ventilspannschraube 37 integriert ist. Der durch die Positionierung des Paßstiftes 31 am Ankerbolzen 15 der Ankerbaugnippe ist gewährleistet, daß die Stirnfläche der Ankerplatte 32 bündig zur Stirnfläche 44 des Ankerbolzens 15 verläuft. Dadurch kann ein kleiner Innendurchmesser des Magnetkerns des Magnetventiles erreicht werden, welche wiederum die Erzeugung einer größeren Magnetkraft erlaubt.

Im Vergleich zur Geometrie des Ankerbolzens 15 der Ankerbaugruppe gemäß der Darstellung in Figur 1 kann der in der erfindungsgemäßen Ausführungsvariante gemäß Figur 2 eine vereinfachte Geometrie gewählt werden, da der Abschnitt, an welchem die Sicherungsscheibe 24 und die Sicherungshülse 25 gesichert sind, d. h. eine Einschnürstelle mit verringertem Durchmesser, entfällt. Auch mit der Herstellung der Einschnürstelle verbundene Freistiche können entfallen, was die Fertigungszeiten eines Ankerbolzens 15 in vereinfachter Geometrie gemäß der Darstellung in Figur 2 günstig beeinflußt.

Die Ventilspannschraube 37, die am Ankerbolzenführungsabschnitt 40 am Ankerbolzen 15 aufgenommen ist, weist über ihren Umfang verteilt mehrere Montageöffnungen 39 auf, die beispielsweise als Durchgangsbohrungen, wie in Figur 2 dargestellt, oder auch als Sacklochbohrungen ausgeführt werden können. Entsprechend der Anzahl der Montageöffnungen 39 am Umfang der Ventilspanrischraube 37 sind an der Ankerplatte 32 ebenfalls Montagedurchbrüche 45 ausgebildet. Durch diese Ausgestaltung einer vormontierbaren Ankerbaugruppe wird erreicht, daß die Ventilspannschraube 37, die ein Außengewinde 38 umfaßt, durch eine Schraubeinrichtung im Inneren des Injektorkörpers 2 befestigt werden kann. Die Schraubeinrichtung zur Montage der erfindungsgemäß konfigurierten Ankerbaugruppe gemäß Figur 2 umfaßt bevorzugt mehrere Stehbolzen, welche die Montagedurchbrüche 45 in der Ankerplatte 32 und jeweils die Montageöffnungen 39 in der Ventilspannschraube 37 durchsetzen bzw. in diese im Falle der Ausführung als Sacklochbohrungen, eingreifen. Bei Einsatz der erwähnten Schraubeinrichtung ist dafür Sorge zu tragen, daß die Symmetrielinien 42 der Durchbrüche 45 in der Ankerplatte 32 und der Montageöffnungen 39 in der Ventilspannschraube 37 zueinander fluchtend liegen, wie in Figur 2 angedeutet. Durch Ausführung der Ventilspannschraube 37 als Paßschraube kann eine sehr genaue Einstellung des Ankerhubweges innerhalb des Injektorkörpers 2 erreicht werden, wenn eine gemäß der Ausführungsvariante in Figur 2 vormontierte Ankerbaugruppe eingesetzt wird. Im vormontierten Zustand stellt sich an der Ankerbaugruppe ein mit Bezugszeichen 36 gekennzeichneter Überhub plus Ankerhub (h_{ü} + hₐ) ein. Dieser Weg 36, welcher den Überhubweg und den Ankerhubweg repräsentiert, ergibt sich bei Vormontage der Ankerbaugruppe gemäß der in Figur 2 dargestellten Ausführungsvariante der erfindungsgemäßen Lösung durch die Position des Paßstiftes 31, durch die Bauhöhe der Ankerplatte 32 mit Montagedurchbrüchen 45 und durch die Bauhöhe 43 der Ventilspannschraube 37. Der Abstand 36 (Vormontagespiel) liegt zwischen der unteren Stirnfläche der Ventilspannschraube 37 und der oberen, ringförmigen Stirnfläche des scheibenförmigen Anschlages 10 am Ankerbolzen 15. Das Vormontagespiel 36 des Ankerbolzens 15 setzt sich zusammen aus Ankerhub plus Überhub. Sowohl der Ankerhub als auch der Überhub sind toleranzbehaftet. Bei einem Ankerhub von z.B. 40 µm beträgt die Ankerhubtoleranz etwa 10 µm, während, bei einem Überhub von beispielsweise 20 µm die Überhubtoleranz etwa 4 µm betragen kann. Das Vormontagespiel 36 kann sich unter Berücksichtigung der angegebenen Werte für die Ankerhubtoleranz bzw. die Überhubtoleranz wie folgt darstellen: Bei einem Sollwert des Ankerhubes von 40 µm und einem Überhub von 20 µm stellt sich ein vorgegebener Sollwert von 60 µm ein. Die sich bei Addition von Ankerhubtoleranzen und Überhubtoleranzen ergebende Differenz ergibt sich aus der mit negativen Vorzeichen eingehenden Ankerhubtoleranz von 10 µm und einer Überhubtoleranz von 4 µm zu 6 µm. Demnach kann das Vormontagespiel 36, welches einen Sollwert von 60 µm hat, um +/- 6 µm schwanken.

Bei der in Figur 2 dargestellten ersten Ausführungsvariante der erfindungsgemäßen Lösung einer vormontierbaren Ankerbaugruppe ist mithin, im Vergleich zur Darstellung gemäß Figur 1, die dort eingesetzte Ankerscheibe 14 entbehrlich. Ferner läßt sich eine genauere Einstellung des Ankerhubweges dadurch erzielen, daß die in Figur 2 dargestellte Ventilspannschraube 37 als Paßschraube ausgebildet ist, welche eine genauere Einstellung des Ankerhubweges erlaubt. Bei Montage der Baugruppe in den Injektorkörper wird der Ankerhub durch einen klassierten Einstellring 11 eingestellt. Die Differenz zum Vormontagespiel 36 ergibt den Überhub zwischen der Ventilspannschraube 37 und der Ankerplatte 45 nach dem Anziehen der Ventilspannschraube 37, so daß der Einsatz lediglich eines klassierten Einstellringes 11 zur Einstellung von Ankerhub und Überhub ausreicht.

In Figur 3 ist eine weitere Ausführungsvariante der erfindungsgemäß vorgeschlagenen Lösung mit einer als Paßschraube ausgebildeten Ventilspannschraube dargestellt.

Gemäß dieser Ausführungsvariante lassen sich durch die Auslegung einer Ankerbaugruppe als vormontierbare Baugruppe einerseits die Bauteilanzahl und andererseits die Einstellund Montageschritte verringern, wohingegen die Einstellgenauigkeit erhöht werden kann. Die in Figur 3 dargestellte vormontierbare Ankerbaugruppe umfaßt im wesentlichen einen Ankerbolzen 15, an welchem am unteren Ende ein scheibenförmig konfigurierter Anschlag 10 ausgebildet ist. An der Umfangsfläche des Ankerbolzens 15 ist eine Ankerplatte 32 aufgenommen, die analog zur in Figur 2 dargestellten Ankerplatte 32 mit Montagedurchbrüchen 45 versehen ist.

Im Unterschied zur in Figur 2 dargestellten Ausführungsvariante der erfindungsgemäß vorgeschlagenen Lösung ist die Ventilspannschraube 41 gemäß der Darstellung in Figur 3 in einer niedrigeren Bauhöhe 39, verglichen mit der Bauhöhe 43 der Ventilspannschraube 37 gemäß Figur 2 ausgebildet. Die Ventilspannmutter 41 ist an einer Hülse 34 gelagert, die einen Ringansatz umfaßt, in welchem Öffnungen 46 ausgebildet sind. Während in der Ausführungsvariante gemäß Figur 2 eine Führung der Ventilspannmutter 37 durch den am Ankerbolzen 15 ausgebildeten Ankerbolzenführungsabschnitt 40 gegeben ist, wird in der Ausführungsvariante gemäß Figur 3 bei der dort dargestellten Ventilspannschraube 41 mit Außengewinde 38 die Ventilspannmutter 41 an der Hülse 34 bzw. deren Führungsabschnitt 33 aufgenommen. Die Hülse 34 umschließt den Ankerbolzen 15 der Ankerbaugruppe ringförmig. Die Ankerbolzenführung wird demnach gemäß der in Figur 3 dargestellten Ausführungsvariante nicht unmittelbar durch die zentrale Durchgangsbohrung der Ventilspannschraube 41 bewirkt, sondern mittelbar durch die Hülse 34, die am unteren Ende einen ringfönnig verlaufenden Ansatz aufweist.

Analog zur in Figur 2 dargestellten Ausführungsvariante umfaßt die Ankerplatte 32 Montagedurchbrüche 45, durch welche die Stehbolzen einer als Montagehilfe dienenden Schraubeinrichtung einführbar sind. Über die Stehbolzen der Schraubeinrichtung, welche ebenfalls in die Montageöffnungen 39, die an der Ventilspannschraube 41 als Durchgangsbohrungen bzw. als Sacklochbohrungen ausgebildet sind, wird die Montage der vormontierten Ankerbaugruppe gemäß der Darstellung in Figur 3 im Inneren des Injektorkörpers 2 des Einspritzventils 1 ermöglicht. Die Ventilspannschraube 41 gemäß der Ausführungsvariante in Figur 3 ist ebenfalls als Paßschraube ausgebildet, so daß sich eine hochgenaue Einstellung der Ventilspannschraube 41 und damit der Ankerbaugruppe im Inneren des Injektorkörpers erzielen läßt.

Die Ankerplatte 32, an deren Stirnseite im Winkelversatz zueinander mehrere Montageöffnungen 45 ausgebildet sind, umfaßt einen hülsenförmigen Ansatz, der den oberen Bereich des Ankerbolzens 15 umschließt. Die Ankerplatte 32 und der Ankerbolzen 15 sind gemäß der in Figur 3 dargestellten Ausführungsvariante der erfindungsgemäßen Lösung über einen Paßstift 31 miteinander verbunden. Der Paßstift 31, welcher eine Öffnung 48 im hülsenförmigen Abschnitt der Ankerplatte 32 durchsetzt, kann als konischer oder als zylindrischer Paßstift ausgebildet werden. Der Paßstift ist in einer Bohrung 49, die senkrecht zur Symmetrielinie 16 des Ankerbolzens 15 verläuft, eingepaßt. Die Öffnung 48 im hülsenförmigen Ansatz der Ankerplatte 32 ist mit einer Längentoleranz 51 ausgebildet. Das sich durch die Längentoleranz 51 ergebende Spiel zwischen dem den hülsenförmigen Ansatz der Ankerplatte 32 durchsetzenden Bereich des Paßstiftes 31 und den Wandungen der Öffnung 48 liegt bei 15 µm +/- 10 µm. Dies bedeutet, daß die Ankerplatte 32 in axiale Richtung, d.h. parallel zur Symmetrielinie 16 des Ankerbolzens 15, um einen Sollwert von 15 µm in axiale Richtung nach oben bzw. nach unten bewegbar ist. Aufgrund der Toleranz 51 der Öffnung 48 im hülsenförmigen Ansatz an der Ankerplatte 32 kann das Spiel in der Öffnung 48 25 µm oder 5 µm betragen oder beliebige Zwischenwerte annehmen. Die Lage der Öffnung 48 im hülsenförmigen Ansatz an der Ankerplatte 32 gemäß Figur 3 ist vorzugsweise so gewählt, daß die Stirnseite der Ankerplatte 32 mit der Stirnseite 44 des Ankerbolzens 15 fluchtet. Die Stirnfläche 50 des Paßstiftes 31 liegt im montierten Zustand . bündig zur Mantelfläche des hülsenförmigen Ansatzes der Ankerplatte 32.

Die in Figur 3 im Halbschnitt dargestellte Ankerbaugruppe kann in vorteilhafter Weise vormontiert werden. Die Vormontage erfordert ein Aufstecken der Hülse 34 auf den Ankerbolzen 15 sowie ein anschließendes Aufbringen der Ventilspannschraube 41 auf den Ringansatz am unteren Ende der Hülse 34. Danach wird die die Montagedurchbrüche 45 aufweisende Ankerplatte 32 auf die Hülse 34 aufgesteckt und durch seitlich erfolgende Montage des Paßstiftes 31 mit dem Ankerbolzen 15 verbunden. Aufgrund der Toleranz 51, die die Öffnung 48 im hülsenförmigen Ansatz der Ankerplatte 32 in Längsrichtung aufweist, kann ein Überhub-Spiel zwischen Ankerplatte 32 und dem Ankerbolzen 15 realisiert werden.

Da die Vormontage der im Halbschnitt dargestellten Ankerbaugruppe außerhalb des Injektorkörpers 2 erfolgt, kann in vorteilhafter Weise ein Fügen der Ankerbaugruppe außerhalb beengter Einbauverhältnisse erfolgen. In bevorzugter Ausgestaltung der Ankerbaugruppe schließt dabei die obere Stirnseite der Ankerplatte 32 mit der ersten Stirnfläche 44 im oberen Bereich des Ankerbolzens 15 ab. Dadurch kann ein kleiner Innendurchmesser des den Elektromagneten 19 aufnehmenden Magnetkerns des Magnetventiles erzielt werden, welcher wiederum die Erzeugung einer größeren Magnetkraft ermöglicht.

Bei der Vormontage der in Figur 3 dargestellten Ankerbaugruppe, d.h. einer Vormontage der Komponenten 34, 41, 32 und 31 am Umfang des Ankerbolzens 15, stellt sich eine gemeinsame Toleranz von Ankerhub und Überhub, das Vormontagespiel 36 ein. Die Herstellung der vormontierten Ankerbaugruppe führt zu einem Vormontagespiel 36, welches definiert ist als die Summe des Überhubsollwertes zuzüglich des Ankerhubsollwertes und zuzüglich der jeweiligen Toleranzen. Die Toleranz ergibt sich aus der Überhubtoleranz abzüglich der Ankerhubtoleranz. Bei der Montage von Ankerbolzen 15, Ankerplatte 32, Hülse 34 und daran aufgenommener Ventilspannschraube 41 erfolgt die Einstellung des Ankerhubes durch das Einlegen eines klassierten Einstellringes 11, der mit seiner unteren Stirnseite 13 auf einer oberen Planfläche des den Entlastungskanal 5 aufnehmenden Bauteiles des Einspritzventils aufliegt. Der Überhub ergibt sich aus dem tatsächlichen Ankerhubwert, welcher sich bei Betätigung des Elektromagneten 19 am Einspritzventil 1 einstellt.

Beispielhaft sei nachfolgend eine Toleranzbetrachtung gegeben. Das Vormontagespiel 36 setzt sich aus einem Ankerhubweg von 40 µm zuzüglich eines Überhubweges von 20 µm +/- einer Ankerhubtoleranz von 10 µm und abzüglich einer Überhubtoleranz von beispielsweise 4 µm zusammen. Demnach ergibt sich ein maximales Vormontagespiel 36 von 66 µm sowie ein minimales Vormontagespiel 36 von 54 µm. Bei einem Ankerhubweg von 40 µm, welcher mit einer Toleranz von +/- 4 µm behaftet sein kann, ergibt sich demnach ein maximaler Ankerhub von 44 µm und ein minimaler Ankerhub von 36 µm. Der Überhub ergibt sich (maximale Seite betrachtet) aus der Differenz des maximal möglichen Vormontagespieles 36 von 66 µm abzüglich des minimalen Ankerhubweges von 36 µm zu 30 µm. Der minimale Überhub ergibt sich aus dem minimal möglichen Vormontagespiel 36 von 54 µm abzüglich des maximalen. Ankerhubes von 44 µm zu 10 µm. Ist der Überhub gemäß des in Figur 3 dargestellten Ausführungsbeispiels durch die Öffnung 48 im hülsenförmigen Ansatz der Ankerplatte 32 gegeben und mit einer Innentoleranz in axiale Richtung von 15 µm +/- 10 µm toleriert, ergeben sich gemäß den obigen Ausführungen entsprechend geänderte Werte.

Nach Einlegen eines entsprechenden klassierten Einstellringes 11 (vgl. Darstellung gemäß Figur 1) und dem Einführen der gemäß Figur 2 oder 3 vormontierten Ankerbaugruppe in das Innere des Injektorkörpers 2 des Einspritzventiles 1, erfolgt die Montage der Ventilspannschrauben 37 bzw. 41 durch eine Stehbolzen umfassende Schraubeinrichtung. Zusätzlich zu den Montageöffnungen 39 am Umfang der Ventilspannschraube 41 gemäß der in Figur 3 dargestellten Ausführungsvariante kann der Ringansatz am unteren Ende der Hülse 34 ebenfalls Öffnungen 46 umfassen, die ein fluchtendes Einführen der Stehbolzen der Schraubeinrichtung ermöglichen. Die Montagedurchbrüche 45 in der Ankerplatte 32 und die Montageöffnungen 39 der Ventilspannschraube 41 sowie die Öffnungen 46 im Ringansatz der den Ankerbolzen 15 umgebenden Hülse 34 fluchten in diesem Falle zueinander, so daß die Stehbolzen alle erwähnten Bauteile erfassen. Die Montageöffnungen 39 können in den Ventilspannschrauben 37 bzw. 41 als Durchgangsbohrungen oder als Sacklochbohrungen ausgebildet werden. Bei Ausbildung der Montageöffnungen 39 in der Ventilspannschraube 41 als Durchgangsbohrungen sind die Öffnungen 46 im Ringansatz am unteren Ende der Hülse 34 entbehrlich.

Die in Figur 3 dargestellte Ausführungsvariante der Erfindung erlaubt eine Vormontage der Ankerbaukomponenten 34, 41, 32 und 31 außerhalb des Injektorkörpers, was insbesondere das Herstellen einer Verbindung zwischen Ankerplatte 32 und dem Ankerbolzen 15 durch einen konisch oder zylindrisch ausgebildeten Paßstift 31 vereinfacht. Ferner lassen sich mit der vormontierten Ankerbaugruppe gemäß der Darstellung in Figur 3 der Einsatz einer Sicherungsscheibe 24 und der Einsatz eine diese Sicherungsscheibe 24 umgebenden Sicherungshülse 25 vermeiden. Durch die erfindungsgemäß vorgeschlagenen Lösung kann eine vereinfachte Geometrie des Ankerbolzens 15 erreicht werden, was aus fertigungstechnischen Gründen vorteilhaft ist, da die Einschnürstelle, an der der Sicherungsring 25 aufgenommen ist, samt zugehörigen Freistichen nunmehr entfällt.

Ein weiterer mit der erfindungsgemäß vorgeschlagenen Lösung erzielbarer Vorteil ist der Umstand, daß durch den Fortfall der Sicherungshülse 25 (vgl. Figur 1) die Ventilfeder 27 nunmehr vollständig im Magnetkern des Elektromagneten 19 untergebracht werden kann. Dadurch läßt sich der Fertigungsschritt der Erzeugung einer Ansenkung im Ablaufstutzen oberhalb des Magnetkerns vermeiden, was einerseits die Taktzeiten in der Fertigung verringert und femer die Bauhöhe des erfindungsgemäß vorgeschlagenen Einspritzventils 1 günstig beeinflußt.

### Bezugszeichenliste

- 1: Einspritzventil
- 2: Ventilkörper
- 3: Einspritzventilglied
- 4: Steuerraum
- 5: Entlastungskanal
- 6: Zulaufdrossel
- 7: Ablaufdrossel
- 8: Schließelement
- 9: Schließelementführungskörper
- 10: Ankerbolzen-Scheibe
- 11: klassierter Einstellring
- 12: obere Stirnfläche
- 13: untere Stirnfläche
- 14: Ankerscheibe
- 15: Ankerbolzen
- 16: Symmetrielinie
- 17: Ventilspannschraube
- 18: Ankerplatte
- 19: Elektromagnet
- 20: Überwurfmutter
- 21: Gewinde
- 22: Stirnseite Ankerplatte
- 23: Magnethülse
- 24: Sicherungsscheibe
- 25: Sicherungshülse
- 26: zapfenförmiger Fortsatz
- 27: Ventilfeder
- 28: Sitz Ventilfeder
- 29: Kunststoffverschluß
- 30: Innengewinde für Ventilspannschraube im Ventilkörper 2
- 31: Paßstift
- 32: Ankerplatte mit Montagedurchbrüchen
- 33: Führungsabschnitt Ankerbolzen
- 34: Hülse
- 35: Bauhöhe Ventilspannschraube 41
- 36: Vormontagespiel
- 37: Ventilspannschraube mit Ankerbolzenführungsabschnitt
- 38: Außengewinde
- 39: Montageöffnung Ventilspannschraube
- 40: Ankerbolzenführungsabschnitt
- 41: Ventilspannschraube kurze Bauhöhe
- 42: Achse Montageöffnungen
- 43: Bauhöhe Ventilspannschraube 37
- 44: erste Stirnfläche Ankerbolzen
- 45: Montagedurchbrüche Ankerplatte
- 46: Öffnungen Ringansatz
- 47: Paßstiftachse
- 48: Öffnung Ankerplatte
- 49: Bohrung Ankerbolzen
- 50: Paßstift Stirnfläche
- 51: Längentoleranz Öffnung 48

## Patentansprüche

1. Magnetventil zur Steuerung eines Einspritzventils (1) einer Verbrennungskraftmaschine mit einem Elektromagneten (19), einem beweglichen Anker mit Ankerplatte (32) und Ankerbolzen (15) und einem mit dem Anker bewegten, mit einem Ventilsitz zusammenwirkenden Schließelement (8) zum Öffnen und Schließen eines Entlashungskanals (5) eines Steuerraums (4) des Einspritzventils (1), wobei die Ankerplatte 32 am Ankerbolzen (15) aufgenommen ist und der Anker mittels einer Ventilspannschraube (37, 41) in einen Gewindeabschnitt (30) des Ventilkörpers (2) des Einspritzventils (1) oberhalb eines Einstellrings (11) aufgenommen ist, **dadurch gekennzeichnet, daß** die den Ankerbolzen (15) umschließende Ventilspannschraube (37, 41) als Paßschraube ausgebildet ist und an einem Ankerbolzenführungsabschnitt (33, 40) unmittelbar oder mittelbar am Ankerbolzen (15) geführt ist, an dem die Ankerplatte (32) mittels eines Paßstiftes (31) in Axialrichtung spielbehaftet aufgenommen ist.

2. Magnetventil gemäß Anspruch 1, **dadurch gekennzeichnet, daß** der die Ankerplatte (32) durchsetzende Paßstift (31) zylindrisch ausgebildet ist.

3. Magnetventil gemäß Anspruch 1, **dadurch gekennzeichnet, daß** der die Ankerplatte (32) durchsetzende Paßstift (31) konisch ausgebildet ist.

4. Magnetventil gemäß Anspruch 1, **dadurch gekennzeichnet, daß** der Ankerbolzen (15) eine Bohrung (49) aufweist, die senkrecht zur Symmetrielinie (16) des Ankerbolzens (15) zur Aufnahme des Paßstiftes (31) verläuft.

5. Magnetventil gemäß Anspruch 1, **dadurch gekennzeichnet, daß** die Ankerplatte (32) einen hülsenförmigen Ansatz aufweist, in welchem eine Öffnung (48) zur Aufnahme des Paßstiftes (31) ausgebildet ist und die Öffnung (48) der Ankerplatte (32) in axialer Richtung mit Spiel (51) behaftet ist.

6. Magnetventil gemäß Anspruch 1, **dadurch gekennzeichnet, daß** die als Paßschraube ausgebildete Ventilspannschraube (37, 41) an dem Einstellring (11) anliegt und den Ankerhub am Ventilkörper (2) des Einspritzventils (1) definiert.

7. Magnetventil gemäß Anspruch 1, **dadurch gekennzeichnet, daß** die als Paßschraube ausgebildete Ventilspannschraube (37, 41) Montageöffnungen (39) zum Ansatz einer Schraubeinrichtung aufweist.

8. Magnetventil gemäß Anspruch 7, **dadurch gekennzeichnet, daß** die Montageöffnungen (39) über den Umfang der Ventilspannschraube (37, 41) verteilt, als Bohrungen ausgeführt sind.

9. Magnetventil gemäß Anspruch 7, **dadurch gekennzeichnet, daß** die Ankerplatte (32) des Ankers eine der Anzahl der Montageöffnungen (39) an der Ventilspannschraube (37, 41) entsprechende Anzahl von Montagedurchbrüchen (45) aufweist.

10. Magnetventil gemäß Anspruch 1, **dadurch gekennzeichnet, daß** der Ankerbolzen (15) einen Ankerbolzenführungsabschnitt (40) zur unmittelbaren Führung der Ventilspannschraube (37) aufweist.

11. Magnetventil gemäß Anspruch 1, **dadurch gekennzeichnet, daß** im vormontierten Zustand der Ankerbaugruppe ein Vormontagespiel (36) in Bezug auf einen Anschlag (10) an dem Ankerbolzen (15) durch die Position (47) des Paßstiftes (31), die Bauhöhe der Ankerplatte (32) und die Bauhöhe (43) der Ventilspannschraube (37) gegeben ist.

12. Magnetventil gemäß Anspruch 1, **dadurch gekennzeichnet, daß** am Ankerbolzen (15) eine einen Ringansatz aufweisende Hülse (34) aufgenommen ist, die einen Führungsabschnitt (33) aufweist, welcher eine Führung für die die Hülse (34) umgebende Ventilspannschraube (41) bildet.

13. Magnetventil gemäß Anspruch 12, **dadurch gekennzeichnet, daß** im vormontierten Zustand der Ankerbaugruppe das Vormontagespiel (36) in Bezug auf einen Anschlag (10) am Ankerbolzen (15) durch die Position (47) des Paßstiftes (31), die Bauhöhe der Ankerplatte (32) sowie durch die Bauhöhe des Ringansatzes der Hülse (34) und die Bauhöhe (35) der Ventilspannschraube (41) definiert ist.

14. Magnetventil gemäß Anspruch 12, **dadurch gekennzeichnet, daß** am die Ventilspannschraube (41) aufnehmenden Ringansatz der Hülse (34) Montageöffnungen (46) angeordnet sind, deren Umfangslage Montageöffnungen (39) in der Ventilspannschraube (41) entsprechen.

15. Magnetventil gemäß Anspruch 1, **dadurch gekennzeichnet, daß** die Stirnfläche der Montagedurchbrüche (45) aufweisenden Ankerplatte (32) bündig mit einer Stirnfläche (44) des Ankerbolzens (15) liegt.

## Claims

1. Solenoid valve for controlling an injection valve (1) of an internal combustion engine having an electromagnet (19), having a movable armature with an armature plate (32) and armature bolt (15), and having a closing element (8), which is moved with the armature and interacts with a valve seat, for opening and closing a relief duct (5) of a control space (4) of the injection valve (1), with the armature plate (32) being held on the armature bolt (15) and the armature being held by means of a valve clamping screw (37, 41) in a threaded section (30) of the valve body (2) of the injection valve (1) above an adjusting ring (11), **characterized in that** the valve clamping screw (37, 41) which surrounds the armature bolt (15) is embodied as a dowel screw and, at an armature bolt guide section (33, 40), is guided directly or indirectly on the armature bolt (15) on which the armature plate (32) is held with play in the axial direction by means of a dowel pin (31).

2. Solenoid valve according to Claim 1, **characterized in that** the dowel pin (31) which extends through the armature plate (32) is of cylindrical design.

3. Solenoid valve according to Claim 1, **characterized in that** the dowel pin (31) which extends through the armature plate (32) is of conical design.

4. Solenoid valve according to Claim 1, **characterized in that** the armature bolt (15) has a bore (49), which runs perpendicular to the line of symmetry (16) of the armature bolt (15), for holding the dowel pin (31).

5. Solenoid valve according to Claim 1, **characterized in that** the armature plate (32) has a sleeve-shaped projection in which is formed an opening (48) for holding the dowel pin (31), and the opening (48) of the armature plate (32) has play (51) in the axial direction.

6. Solenoid valve according to Claim 1, **characterized in that** the valve clamping screw (37, 41) which is embodied as a dowel screw bears against the adjusting ring (11) and defines the armature stroke on the valve body (2) of the injection valve (1).

7. Solenoid valve according to Claim 1, **characterized in that** the valve clamping screw (37, 41) which is embodied as a dowel screw has assembly openings (39) for the engagement of a screwing device.

8. Solenoid valve according to Claim 7, **characterized in that** the assembly openings (39) are formed, as bores, so as to be distributed over the periphery of the valve clamping screw (37, 41).

9. Solenoid valve according to Claim 7, **characterized in that** the armature plate (32) of the armature has a number of assembly apertures (45) corresponding to the number of assembly openings (39) on the valve clamping screw (37, 41).

10. Solenoid valve according to Claim 1, **characterized in that** the armature bolt (15) has an armature bolt guide section (40) for the direct guidance of the valve clamping screw (37).

11. Solenoid valve according to Claim 1, **characterized in that**, in the pre-assembled state of the armature assembly, a pre-assembly play (36) with respect to a stop (10) on the armature bolt (15) is given by the position (47) of the dowel pin (31), the installation height of the armature plate (32) and the installation height (43) of the valve clamping screw (37).

12. Solenoid valve according to Claim 1, **characterized in that** a sleeve (34) which has an annular projection is held on the armature bolt (15), which sleeve (34) has a guide section (33) which forms a guide for the valve clamping screw (41) which surrounds the sleeve (34).

13. Solenoid valve according to Claim 12, **characterized in that**, in the pre-assembled state of the armature assembly, the pre-assembly play (36) with respect to a stop (10) on the armature bolt (15) is defined by the position (47) of the dowel pin (31), the installation height of the armature plate (32) and by the installation height of the annular projection of the sleeve (34) and the installation height (35) of the valve clamping screw (41).

14. Solenoid valve according to Claim 12, **characterized in that** assembly openings (46) are arranged on the annular projection, which holds the valve clamping screw (41), of the sleeve (34), the peripheral positions of which assembly openings (46) correspond to assembly openings (39) in the valve clamping screw (41).

15. Solenoid valve according to Claim 1, **characterized in that** the end face of the armature plate (32) which has assembly apertures (45) lies flush with an end face (44) of the armature bolt (15).

## Revendications

1. Electrovanne pour commander un injecteur (1) de moteur à combustion interne comportant un électroaimant (19), un induit mobile avec une plaque d'induit (32) et un goujon d'induit (15) ainsi qu'un élément d'obturation (8) mobile avec l'induit et coopérant avec un siège de soupape pour ouvrir et fermer un canal de décharge (5) d'une chambre de commande (4) de l'injecteur (1),
la plaque d'induit (32) étant installée sur le goujon d'induit (15) et l'induit est monté à l'aide d'une vis de serrage de vanne (37, 41) dans un segment fileté (30) du corps (2) de l'injecteur (1) au-dessus d'une bague de réglage (11),
**caractérisée en ce que**
la vis de serrage de vanne (37, 41) entourant le goujon d'induit (15) est une vis ajustée guidée sur un segment de guidage de goujon d'induit (33, 40) directement ou indirectement sur le goujon d'induit (15), qui reçoit la plaque d'induit (32) à l'aide d'une goupille (31), avec du jeu dans la direction axiale.

2. Electrovanne selon la revendication 1,
**caractérisée en ce que**
la goupille (31) traversant la plaque d'induit (32) est de forme cylindrique.

3. Electrovanne selon la revendication 1,
**caractérisée en ce que**
la goupille (31) traversant la plaque d'induit (32) est de forme conique.

4. Electrovanne selon la revendication 1,
**caractérisée en ce que**
le goujon d'induit (15) comporte un perçage (49) perpendiculaire à son axe de symétrie (16) pour recevoir la goupille (31).

5. Electrovanne selon la revendication 1,
**caractérisée en ce que**
la plaque d'induit (32) comporte un prolongement en forme de manchon muni d'un orifice (48), ayant du jeu (51) dans la direction axiale pour recevoir la goupille (31).

6. Electrovanne selon la revendication 1,
**caractérisée en ce que**
la vis de serrage d'injecteur (37, 41) s'applique contre la bague de réglage (11) et définit la course de l'induit sur le corps (2) de l'injecteur (1)

7. Electrovanne selon la revendication 1,
**caractérisée en ce que**
la vis de serrage (37, 41) en forme de vis ajustée, comporte des orifices de montage (39) pour appliquer un moyen de vissage.

8. Electrovanne selon la revendication 7,
**caractérisée en ce que**
les orifices de montage (39) sont des perçages répartis à la périphérie de la vis de serrage d'injecteur (37, 41).

9. Electrovanne selon la revendication 7,
**caractérisée en ce que**
la plaque (32) de l'induit comporte un nombre de passages traversants (45) du montage correspondant à un nombre d'orifice de montage (39).

10. Electrovanne selon la revendication 1,
**caractérisée en ce que**
le goujon d'induit (15) comporte un segment de guidage de goujon d'induit (40) pour guider directement la vis de serrage d'injecteur (37).

11. Electrovanne selon la revendication 1,
**caractérisée en ce qu'**
à l'état préassemblé de l'assemblage d'induit, un jeu de préassemblage (36) est défini par rapport à une butée (10) du goujon d'induit (15) par la position (47) de la goupille (31), la hauteur constructive de la plaque d'induit (32) et la hauteur constructive (33) de la vis de serrage d'injecteur (37).

12. Electrovanne selon la revendication 1,
**caractérisée en ce que**
le goujon d'induit (15) porte un manchon (34) muni d'un épaulement annulaire ayant un segment de guidage (33) qui assure le guidage de la vis de serrage (41) entourant le manchon (34).

13. Electrovanne selon la revendication 12,
**caractérisée en ce qu'**
à l'état préassemblé de l'ensemble de l'induit, le jeu de préassemblage (36) est défini par rapport à une butée (10) du goujon d'induit (15), par la position (47) de la goupille (31), la hauteur de construction de la plaque (32) ainsi que la hauteur de construction de l'épaulement annulaire du manchon (34) et la hauteur de construction (35) de la vis de serrage d'injecteur (41).

14. Electrovanne selon la revendication 12,
**caractérisée en ce que**
l'épaulement annulaire du manchon (34) recevant la vis de serrage d'injecteur (41) comporte des orifices de montage (46) dont les positions périphériques correspondent aux orifices de montage (39) de la vis de serrage.

15. Electrovanne selon la revendication 1,
**caractérisée en ce que**
la surface frontale de la plaque d'induit (32) comportant des passages de montage (45) est à niveau avec la surface frontale (44) du goujon d'induit (15).
